(19) Europäisches Patentamt / European Patent Office / Office européen des brevets

(11) **EP 2 097 728 B1**

(12) **FASCICULE DE BREVET EUROPEEN**

(45) Date de publication et mention
de la délivrance du brevet:
**09.11.2016 Bulletin 2016/45**

(21) Numéro de dépôt: **07871961.4**

(22) Date de dépôt: **18.12.2007**

(51) Int Cl.:
*G01M 3/28* (2006.01)  *G01M 5/00* (2006.01)
*G01M 3/24* (2006.01)

(86) Numéro de dépôt international:
**PCT/FR2007/052547**

(87) Numéro de publication internationale:
**WO 2008/081148 (10.07.2008 Gazette 2008/28)**

(54) **SYSTEME DE DETECTION ET DE LOCALISATION D'UN EVENEMENT DANS UNE CANALISATION DE TRANSPORT DE FLUIDE PERMETTANT L'UTILISATION DE MOYENS DE COMMUNICATION DE FAIBLE BANDE PASSANTE**

DETEKTIONS- UND ORTUNGSSYSTEM FÜR EIN EREIGNIS IN EINEM FLÜSSIGKEITSTRANSPORTKANAL FÜR VERWENDUNG VON TIEFPASSBANDKOMMUNIKATIONSMITTELN

DETECTION AND LOCATION SYSTEM OF AN EVENT IN A FLUID TRANSPORT CHANNEL ALLOWING THE USE OF LOW PASS-BAND COMMUNICATION MEANS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.12.2006 FR 0655821**

(43) Date de publication de la demande:
**09.09.2009 Bulletin 2009/37**

(73) Titulaire: **CYBERNETIX**
**13382 Marseille Cedex 13 (FR)**

(72) Inventeurs:
• **QUESNEL, Jean-Jacques**
  **F-83270 Saint Cyr Sur Mer (FR)**
• **BESANCENOT, Fabien**
  **F-13590 Meyreuil (FR)**

(74) Mandataire: **Domange, Maxime**
**Cabinet Beau de Lomenie**
**232, avenue du Prado**
**13295 Marseille Cedex 08 (FR)**

(56) Documents cités:
**WO-A-01/81885**   **WO-A-98/25121**
**WO-A-2004/031719**   **DE-A1- 3 726 585**
**FR-A1- 2 503 363**   **GB-A- 2 367 362**
**US-A- 5 101 774**

EP 2 097 728 B1

**Description**

Arrière-plan de l'invention

La présente invention se rapporte au domaine général des systèmes de détection et de localisation d'un évènement dans une canalisation de transport d'un fluide. Le fluide transporté peut être en phase gazeuse ou liquide. Le fluide peut être de l'eau, des hydrocarbures liquides ou gazeux ou tout autre fluide chimique ou pétrochimique.

Plus précisément, l'invention concerne de tels systèmes utilisant des modules déportés placés sur la canalisation et associés à au moins un capteur d'ondes acoustiques, de vibrations ou de contraintes.

Les évènements détectés par le système de détection et de localisation sont donc des évènements qui génèrent la propagation d'une onde acoustique, de vibrations ou de contraintes dans le fluide et/ou dans la structure même de la canalisation afin de pouvoir être enregistrés par les capteurs utilisés dans un Système de détection et de localisation selon l'invention.

Le système de détection et de localisation selon l'invention sera donc apte à détecter et localiser les impacts mécaniques, parmi lesquels des chocs, par exemple liés à des travaux de proximité ou encore au passage d'outils d'inspection, les fuites, qu'elles soient des fuites de corrosion ou des fuites accidentelles, les transitoires de pression, correspondant par exemple à l'ouverture ou à la fermeture de vannes, à la manipulation de piquages clandestins ou encore à l'apparition soudaine d'une fuite, notamment les fuites conséquentes à une rupture de canalisation. Il peut d'ailleurs se produire qu'une fuite ne génère pas assez de bruit pour être détectée autrement que par l'onde de pression générée en début ou en fin du phénomène de fuite.

Actuellement, les systèmes connus mettent en oeuvre des capteurs qui permettent l'acquisition d'un signal temporel. Le signal temporel est ensuite envoyé, par le module déporté associé, vers un dispositif centralisateur qui réalise l'analyse des signaux temporels reçus en provenance d'une pluralité de modules déportés afin de détecter, dans ces signaux temporels et dans leurs corrélations, la présence d'ondes acoustiques, de vibrations ou de contraintes révélatrices de l'occurrence d'un évènement.

La transmission des signaux temporels vers un dispositif centralisateur d'analyse présente l'inconvénient d'impliquer l'utilisation de moyens de communication à haut débit et donc, à grande bande passante, entre les capteurs et le dispositif centralisateur. Les systèmes de détection et de localisation existants sont par conséquent coûteux et complexes à mettre en ouvre.

Les documents suivants représentent l'état de la technique dans le domaine de la détection et de la localisation d'un évènement de type choc, fuite ou transitoire de pression dans une canalisation: WO 01/81885 A1, WO 98/25121, GB 2 367 362 A, DE 3 726 585 A1, FR 2 503 363, US 5 101 774, WO 2004/031719 A1.

Objet et résumé de l'invention

La présente invention a donc pour but principal de palier de tels inconvénients en proposant un système de détection et de localisation d'un évènement de type impact mécanique, fuite ou transitoire de pression dans une canalisation de transport de fluide, comprenant au moins deux modules déportés de détection destinés à être placés sur la canalisation séparés les uns des autres par des distances connues, chaque module déporté incluant chacun au moins des moyens d'acquisition d'un signal temporel en provenance d'au moins un capteur d'ondes acoustiques ou de vibrations ou de contraintes associé au module déporté et repéré par rapport à celui-ci, des moyens d'horodatage du signal temporel, des moyens de traitement du signal temporel aptes à calculer un descripteur multi-composantes représentatif du signal temporel, basé sur une décomposition en N niveaux issus de la densité spectrale du signal temporel dans N bandes de fréquence et en au moins un niveau issu de calculs statistiques d'ordre supérieur et à analyser ces niveaux de manière à détecter un impact mécanique ou une fuite ou un transitoire, des moyens d'émission pour émettre un signal de détection comportant au moins une partie de ce descripteur associé à l'horodate du signal temporel correspondant à la détection, cette partie du descripteur comprenant les niveaux dans les bandes de fréquence révélatrices de l'occurrence de l'évènement détecté, vers au moins un module déporté adjacent ou vers un dispositif d'analyse apte à analyser les signaux de détection, à confirmer et à localiser les impacts mécaniques ou fuites ou transitoires survenus.

Avec un tel système de détection et de localisation, chaque module déporté est muni de moyens de traitement des signaux temporels locaux pour calculer un descripteur du signal temporel comprenant moins de données que le signal temporel lui-même puisqu'échantillonnant la densité de puissance spectrale du signal sur seulement un certain nombre de bandes de fréquences. Les moyens de traitement réalisent en outre une analyse des bandes de fréquence de cette décomposition de manière à détecter directement un impact mécanique, une fuite ou un transitoire.

L'envoi subséquent d'une partie du descripteur associée à l'horodate du signal temporel correspondant vers un dispositif d'analyse est alors suffisant à celui-ci pour confirmer et localiser les impacts mécaniques, fuites ou transitoires survenus. L'invention permet donc de ne pas transmettre le signal temporel intégral ou partiel vers le dispositif d'analyse. En outre, les niveaux transmis sont ceux grâce auxquels la détection a pu être réalisée et ceux qui seront utiles pour les corrélations utiles à la confirmation de l'évènement.

En n'envoyant que les niveaux observés dans les bandes de fréquence dans lesquelles un événement a été détecté au sein du module, l'invention permet de limiter les données transitant entre les modules déportés ou vers le dispositif d'analyse. L'invention permet de mettre en oeuvre une détection et une localisation d'événements en utilisant des bandes passantes faibles sur les réseaux de communication utilisés pour les transmissions au sein du système selon l'invention. L'invention permet encore d'utiliser des réseaux de communications présentant de bas débits de transport de données.

La détection est faite localement et une partie sélectionnée et prétraitée seulement est envoyée vers des moyens de localisation.

Selon une caractéristique avantageuse de l'invention, la détection d'un évènement est effective lorsque le dépassement d'un seuil de niveau préalablement déterminé est observé sur au moins une des composantes du descripteur issu du signal temporel acquis.

Avec une telle caractéristique, les moyens de détection peuvent être constitués à l'aide d'un simple comparateur de données, ce qui permet d'implémenter de manière très simple les fonctions de l'invention.

Dans une mise en oeuvre avantageuse, les seuils utilisés pour chacune des composantes du descripteur sont auto adaptatifs, leur adaptation étant réalisée à l'aide du niveau moyen observé dans chacune des composantes du descripteur.

Selon une caractéristique particulière, le seuil adaptatif pour au moins une des composantes du descripteur est calculé selon la formule suivante : Niveau moyen de la composante + M.(Ecart-type moyen de la composante). M est par exemple supérieur à 3 et avantageusement compris entre 3 et 10. Le calcul du niveau moyen et de l'écart-type est par exemple effectué avec application d'un facteur d'oubli décroissant vers les mesures les plus anciennes. Cela résulte en ce que les valeurs les plus anciennes ont moins de poids dans les calculs de moyennes.

Selon une caractéristique avantageuse de l'invention, les types d'évènement sont chacun associés à certaines composantes du descripteur de manière à permettre leur distinction.

En outre, avantageusement, des intervalles de durées de dépassement de seuil dans une ou des bandes de fréquence sont associés chacun à un type d'évènement de manière à permettre la distinction des événements.

Selon un mode de réalisation préférentiel, le système de détection et de localisation selon l'invention est tel que chaque module déporté est tel que les moyens d'émission sont aptes à émettre un signal de détection à destination du ou des modules déportés adjacents lors de la détection interne par les moyens de traitement du signal du module déporté d'ondes acoustiques ou de vibrations ou de contraintes révélatrices d'un impact mécanique ou d'une fuite ou d'un transitoire de pression, et en ce que chaque module déporté comprend en outre des moyens de réception aptes à recevoir un ou des signaux de détection en provenance du ou des modules déportés adjacents et chaque module déporté comprend en outre des moyens de confirmation et de localisation aptes à analyser la cohérence des signaux de détection de manière à confirmer et localiser l'impact mécanique ou la fuite ou le transitoire de pression.

Avec une telle caractéristique, les modules déportés assurent la fonction de confirmation et de localisation sans faire appel à un dispositif centralisateur. Chaque module déporté est donc alors un dispositif d'analyse apte à confirmer et à localiser l'impact mécanique, la fuite ou le transitoire de pression à partir des signaux de détection comprenant les descripteurs ou une partie du descripteur correspondant à une détection d'évènements dans les modules déportés adjacents.

Avantageusement, chaque module déporté est apte à fonctionner selon deux modes, un mode dit détecteur et un mode dit confirmateur, le basculement en module déporté confirmateur étant déclenché lorsque, à la suite d'une détection au sein du module déporté considéré, le module déporté reçoit au moins un signal de détection dans le cas où le module déporté possède un seul module déporté adjacent ou lorsque le module déporté reçoit au moins deux signaux de détection dans le cas où le module déporté possède deux modules déportés adjacents.

Avec une telle caractéristique, après une détection, chaque module déporté envoie un signal de détection au(x) module(s) déporté(s) voisin(s) et prend la fonction de confirmateur de la détection lorsqu'il reçoit un ou des signaux de détection en provenance du ou des modules déportés voisins, les autres se comportant en quelque sorte en esclaves sur le réseau de modules déportés et n'ayant pour fonction que celle de détecteur. La fonction de confirmation est néanmoins activable au sein de tous les modules déportés du système de détection et de localisation, chacun de ces modules déportés pouvant donc l'être tour à tour en fonction de l'endroit où a eu lieu l'évènement détecté.

L'invention concerne aussi un procédé de détection et de localisation d'un évènement de type impact mécanique, fuite ou transitoire de pression dans une canalisation de transport de fluide, le procédé mettant en oeuvre au moins deux modules déportés de détection destinés à être placés sur la canalisation séparés les uns des autres par des distances connues, le procédé comprenant les étapes suivantes, mises en oeuvre au sein de chaque module déporté, acquisition d'un signal temporel en provenance d'au moins un capteur d'ondes acoustiques ou de vibrations ou de contraintes associé au module déporté et repéré par rapport à celui-ci, horodatage du signal temporel, traitement du signal temporel incluant une sous-étape de calcul d'un descripteur multi-composantes représentatif du signal temporel, basé sur une décomposition en N niveaux issus de la densité spectrale du signal temporel dans N bandes de fréquence et en au moins un niveau issu de calculs statistiques d'ordre supérieur et une sous-étape d'analyse de ces niveaux de manière à détecter un impact mécanique ou une fuite ou un transitoire, émission d'un signal de détection comportant au moins une partie de ce descripteur associé à l'horodate du signal temporel correspondant à la détection, cette partie du descripteur comprenant les niveaux dans les bandes de fréquence révélatrices de l'occurrence de l'évènement détecté, vers au moins un module déporté adjacent ou vers un dispositif d'analyse apte à analyser les signaux de détection, à confirmer et à localiser les impacts mécaniques ou fuites ou transitoires survenus.

Selon une implémentation préférée, les différentes étapes du procédé sont déterminées par des instructions de programmes d'ordinateurs.

En conséquence, l'invention vise aussi un programme d'ordinateur sur un support d'informations, ce programme étant susceptible d'être mis en oeuvre dans un microprocesseur d'un module déporté, ce programme comportant des instructions adaptées à la mise en oeuvre des étapes suivantes :

- acquisition d'un signal temporel en provenance d'au moins un capteur d'ondes acoustiques ou de vibrations ou de contraintes associé au module déporté et repéré par rapport à celui-ci,
- horodatage du signal temporel,
- traitement du signal temporel incluant une sous-étape de calcul d'un descripteur multi-composantes représentatif du signal temporel, basé sur une décomposition en N niveaux issus de la densité spectrale du signal temporel dans N bandes de fréquence et en au moins un niveau issu de calculs statistiques d'ordre supérieur et une sous-étape d'analyse de ces niveaux de manière à détecter un impact mécanique ou une fuite ou un transitoire,
- émission d'au moins une partie de ce descripteur associé à l'horodate du signal temporel correspondant vers au moins un module déporté adjacent ou vers un dispositif d'analyse apte à analyser les signaux de détection, à confirmer et à localiser les impacts mécaniques ou fuites ou transitoires survenus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur ou encore une carte impact mécanique.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente schématiquement un système de détection et de localisation d'évènement sur une canalisation de transport de fluide,
- la figure 2 représente schématiquement un module déporté selon l'invention,
- les figures 3a, 3b, 3c et 3d illustrent schématiquement la décomposition d'un signal temporel sur une pluralité de bandes de fréquence ainsi que proposé selon l'invention.

Description détaillée d'un mode de réalisation

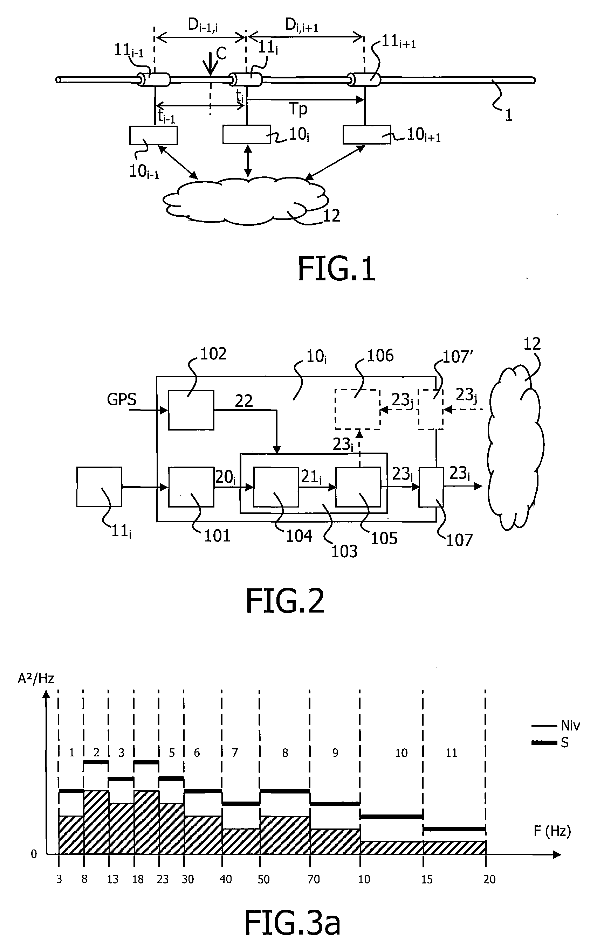

La figure 1 représente un système de détection et de localisation d'un évènement de type impact mécanique, fuite ou transitoire de pression dans une canalisation 1 de transport de fluide.

Ce système est constitué d'au moins deux modules déportés de détection $10_{i-1}$ et $10_i$, destinés à être reliés entre eux par un réseau 12 et à être placés à proximité de la canalisation 1 et séparés par une distance connue $D_{i-1,i}$.

La figure 2 décrit plus précisément un module déporté $10_i$ selon l'invention. Chaque module déporté $10_i$ inclut au moins des moyens d'acquisition 101 d'un signal acoustique temporel $20_i$ en provenance d'au moins un capteur $11_i$

d'ondes acoustiques, de vibrations ou encore de contraintes associé au module déporté $10_i$.

Comme illustré sur la figure 1, le capteur $11_i$ est placé sur la canalisation 1, généralement au contact de celle-ci. Il est repéré géographiquement par rapport au module déporté $10_i$ auquel il est associé et, par conséquent, par rapport aux autres capteurs associés aux autres modules déportés. D'autant plus grande sera la précision avec laquelle sont connues les distances entre les capteurs qui reçoivent les ondes acoustiques, les vibrations ou les contraintes, d'autant plus grande sera la précision de localisation des impacts mécaniques et des fuites.

Par ailleurs, il est envisageable qu'une pluralité de capteurs repérés par rapport à un module déporté soient associés à ce même module qui acquiert alors les signaux temporels en provenance de chacun de ces capteurs. Néanmoins, dans la suite, la description considère un module déporté associé à un seul capteur.

Le système de détection et de localisation est apte à détecter et à localiser un évènement C ayant lieu entre les deux modules déportés $10_{i-1}$ et $10_i$. Afin de pouvoir être détecté par le Système de détection et de localisation selon l'invention, l'évènement C doit donner lieu à une propagation d'onde, par exemple acoustique.

Il peut s'agir d'un impact mécanique, d'une fuite ou encore d'un transitoire de pression. Les transitoires de pression sont notamment observés lors des ouvertures ou fermetures de vannes, des manipulations de piquage clandestins ou encore lors de l'occurrence ou de la cessation d'une fuite. Ils présentent l'avantage d'être des ondes à basse fréquence généralement peu atténuées même dans les fluides très visqueux dans lesquels les ondes acoustiques sont rapidement non détectables.

Pour réaliser la détection, chaque module déporté $10_i$ comprend des moyens de traitement 103 du signal temporel $20_i$ reçu en provenance des moyens d'acquisition 101. Ces moyens de traitement 103 sont aptes à détecter des ondes acoustiques, des vibrations ou des contraintes révélatrices d'un impact mécanique, d'une fuite ou encore d'un transitoire.

Pour cela, les moyens de traitement 103 du signal temporel $20_i$ en provenance du capteur $11_i$ incluent une unité de calcul 104 apte à calculer un descripteur multi-composantes $21_i$ représentatif du signal temporel $20_i$. Au besoin, le signal temporel est filtré préalablement à un tel calcul.

La structure du descripteur $21_i$ selon l'invention est illustrée sur la figure 3a. Le descripteur $21_i$ est basé sur une décomposition en N niveaux issus de N bandes de fréquence sur lesquelles est décomposée la densité spectrale de puissance du signal temporel préalablement calculée. Sur la figure 3a, douze fréquences entre lesquelles sont définies N=11 bandes de fréquence sont représentées.

Au sein de l'unité de calcul 104, le signal temporel $20_i$ est donc décomposé sous forme de niveaux Niv dans chacune des d bandes de fréquence centrées sur les onze fréquences représentées. La décomposition est obtenue par fenêtrage temporel suivi d'un calcul de densité spectrale de puissance qui est ensuite échantillonnée sur les N bandes de fréquences. Les niveaux Niv de valeurs efficaces sont calculés comme étant la somme ou intégrale des valeurs de la densité spectrale de puissance entre les fréquences minimum et maximum de chaque bande.

On obtient alors des niveaux de valeurs efficaces (RMS pour Root Mean Square) répartis sur les bandes de fréquences. Ce sont onze valeurs qui permettent de décrire le signal temporel de manière suffisante pour qu'y soient détectés des évènements.

Les bandes de fréquence présentées sur la figure 2 sont des exemples. La première bande de fréquence est avantageusement centrée sur la première fréquence de coupure des capteurs utilisés, par exemple 3 Hz. Néanmoins, cette première fréquence est paramétrable pour adapter la décomposition du signal temporel à la sensibilité du capteur qui mesure le signal en une unité notée A, qui peut être une unité de pression, par exemple des Pascals Pa.

Afin de détecter un évènement, les niveaux Niv dans les N bandes de fréquence du descripteur $21_i$ sont ensuite analysés au sein d'une unité de détection 105. Un évènement est détecté lorsqu'un seuil S est franchi dans au moins une des N bandes de fréquence.

Les seuils S de détection peuvent être préalablement définis par un opérateur ou peuvent être auto-adaptatifs.

Dans ce dernier cas, une phase d'auto-réglage initiale est avantageusement réalisée sur demande de l'opérateur du système de détection. Elle est avantageusement effectuée lors de l'installation du système lorsque la conduite 1 est en configuration calme, c'est-à-dire qu'aucun évènement significatif n'est observé.

Les valeurs moyennes et les écarts types sont alors calculés par bande de fréquence à partir des mesures effectuées durant cette phase d'auto-réglage.

Les seuils dans chaque bande de fréquence sont ensuite calculés comme étant le niveau moyen observé dans la bande + M fois l'écart-type observé dans la bande de fréquence, M étant le facteur de seuil préalablement défini et commun pour toutes les composantes du descripteur. M est par exemple supérieur à 3 et avantageusement compris entre 3 et 10. Le calcul du niveau moyen et de l'écart-type est par exemple effectué avec application d'un facteur d'oubli $a^{k-p}$ décroissant vers les mesures les plus anciennes, a étant égal à une valeur prédéfinie entre 0,9 et 0,99. On exprime alors la moyenne sous la forme suivante :

Moyenne= $[(1-a)/(1-a^k)]$ somme$[a^{k-p}.|X(p)|]$ avec p varie de 1 à k qui est le nombre total de mesures X prises en compte.

Cela résulte en ce que les valeurs les plus anciennes ont moins de poids dans les calculs de moyennes.

Il est aussi envisagé que le système puisse être commuté en mode auto-adaptatif permanent. Selon ce mode, les seuils par bande de fréquence sont estimés automatiquement, au fil du temps, au sein de chaque module déporté. Le calcul des seuils est bien sûr interrompu dès qu'une détection d'évènement a lieu sur une des bandes de fréquence. Les valeurs moyennes et les écarts types par bande sont alors calculés en permanence à partir des mesures mémorisées sur une période donnée avec application d'un facteur d'oubli, par exemple un facteur exponentiel.

Les calculs relatifs à la phase d'auto-réglage ou relatifs au mode auto-adaptatifs sont avantageusement réalisés au sein de l'unité de calcul 104, les seuils S déduits de ces calculs étant utilisés au sein de l'unité de détection 105.

Par ailleurs, chaque type d'évènement à détecter, impact mécanique, fuite ou transitoire de pression correspond à un dépassement de seuil S dans une ou plusieurs bandes de fréquence particulières. Ainsi, les bandes de fréquences où sont observés des dépassements permettent la distinction du type d'évènement.

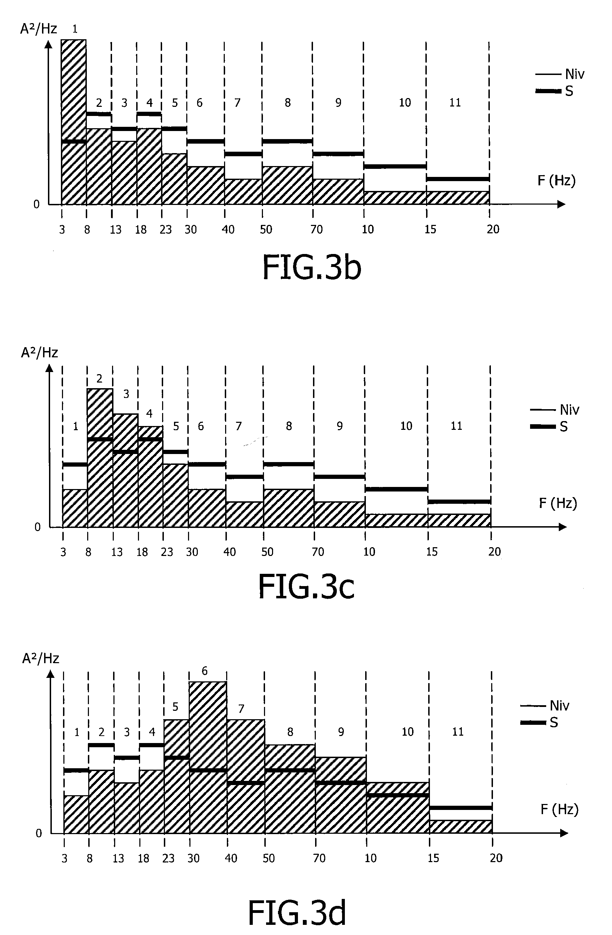

Cela est illustré sur les figures 3b, 3c et 3d.

Ainsi, comme représenté sur la figure 3b, les transitoires de pression se propageant sous la forme d'une onde de basse fréquence se traduiront par un dépassement de seuil dans la plus basse des bandes de fréquence.

Comme représenté sur la figure 3c, les impacts mécaniques génèrent la propagation d'une onde acoustique transitoire caractérisée par une fréquence intermédiaire de la ou des bandes en dépassement de seuil S supérieure à celle des transitoires de pression.

Un dépassement de seuil transitoire, par exemple quelques centaines de millisecondes, dans une ou plusieurs bandes de fréquence intermédiaires sera donc révélateur de l'occurrence d'un impact mécanique.

Comme illustré sur la figure 3d, les fuites génèrent une onde acoustique permanente dont les fréquences caractéristiques ne sont pas prédictibles à priori. Cependant, dans le cas d'une fuite, les dépassements de seuil présentés sur la figure 3d dureront dans le temps dans une ou plusieurs bandes de fréquence, cela permettra de détecter la présence d'une fuite, par rapport à un impact. Ainsi, les moyens de traitement sont également aptes à mesurer les durées de dépassement de seuil S afin de dissocier les fuites des chocs. Une durée de dépassement par exemple supérieure à 30 secondes signera la présence d'une fuite.

Ainsi, on peut caractériser chaque type d'évènement et chaque évènement par un certain nombre de niveaux maximums atteints dans un certain nombre de bandes, par l'instant de déclenchement de l'évènement et par l'instant de cessation de l'évènement.

Pour affiner la détection, l'unité de calcul 104 calcule un niveau complémentaire à partir de calculs statistiques d'ordre supérieur, en plus des niveaux dans les bandes de fréquence. L'ensemble constitué par ce niveau et par les niveaux dans les bandes de fréquence constituent les composantes du descripteur.

Le niveau issu de calculs statistiques d'ordre supérieur peut par exemple être le Kurtosis, qui est un cumulant d'ordre 3 ou encore un cumulant d'ordre 4 défini par l'équation suivante :

$$Cumul = [(1/N)*Somme(X(i)^4)] - [(3/N^2) * [somme(X(i)^2)]^2]$$

avec N = nombre de mesures X, i variant de 1 à N. X représente donc les valeurs analysées qui sont par exemple une mesure de pression en Pascal réalisée par le capteur $11_i$.

Les statistiques sont alors appliquées de manière glissante sur le signal temporel avec calcul auto-adaptatif du seuil de détection intégrant un facteur d'oubli. Le niveau ainsi obtenu par calcul statistique aux ordres supérieurs et est alors surveillé au même titre que les niveaux dans les bandes de fréquence.

Un dépassement dans ce niveau obtenu par calcul statistique aux ordres supérieurs complémentaire permet une détection plus précise des transitoires, qu'ils soient de pression ou dus à des chocs. Les fuites, qui génèrent un bruit gaussien, ne signeront rien dans ce niveau complémentaire, ce qui permet de les différencier automatiquement.

Lorsque le transitoire est un transitoire de pression, il est avantageux de le modéliser sous forme d'une modélisation polynomiale de l'onde au minimum à l'ordre 3. La modélisation du transitoire de pression se fait à partir du signal temporel contenant l'onde et sera avantageusement constitué d'au moins trois coefficient A, B et C définissant l'équation $Ax^3+Bx^2+Cx$.

Une telle modélisation est possible car les transitoires de pression présentent toujours globalement la même structure en pseudo sinusoïde allant en s'atténuant. La régression sur une telle forme est donc possible et permet de simplifier la corrélation des formes de signaux reçus en comparant les valeurs des coefficients de la régression. En revanche, une telle régression sur trois coefficients n'est pas réalisable pour les chocs qui n'ont pas de structure prédéterminée.

Ainsi, l'analyse, au sein de l'unité de détection 105, des niveaux dans chacune des bandes de fréquence du descripteur $21_i$ permet de détecter un évènement et de distinguer un impact mécanique, une fuite ou un transitoire de pression.

L'unité de détection 105 mémorise alors les niveaux maximums atteints sur les différentes bandes dans lesquelles un dépassement de seuil a été observé ainsi que, le cas échéant, le niveau maximal du niveau obtenu par calcul statistiques aux ordres supérieurs dans le cas où un dépassement de seuil a eu lieu sur ce niveau.

Les moyens de traitement 103 disposent donc du descripteur $21^i$ associé au signal temporel $20^i$ reçu. Ce descripteur $21^i$ présente l'avantage de contenir moins de données que le signal temporel $20^i$ lui-même. Le descripteur $21^i$ est donc avantageusement utilisé pour communiquer la détection d'un évènement C à un dispositif d'analyse 13 apte à analyser les descripteurs $21_i$. Le descripteur $21_i$ ou au moins une partie de celui-ci est alors donc inclus dans un signal de détection $23_i$ envoyé vers le dispositif d'analyse 13.

Le dispositif d'analyse 13 est avantageusement relié aux modules déportés $10_i$ par l'intermédiaire d'un réseau de communication 12. Puisque le descripteur ne contient qu'une faible quantité de données, de nombreuses technologies, même offrant une faible bande passante et donc un faible débit de données, peuvent être utilisées.

Ainsi les liaisons entre les modules déportés $10_i$ et le dispositif d'analyse 13 peuvent être un réseau de communication filaire utilisant une des technologies RTC (pour Réseau Téléphonique Commuté en anglais), TCP/IP (pour Transfert Control Protocol/ Internet Protocol en anglais), UDP (pour User Datagram Protocol en anglais) ou encore SCADA (pour Supervisory Control and Data Acquisition en anglais) etc.

Le réseau 12 peut également être un réseau de communication radio utilisant une des technologies GSM (pour Global System for Mobile communication en anglais), GPRS (pour General Packet Radio Service en anglais), satellite etc.

Le module déporté $10_i$ est en outre muni de moyens d'horodatage 102. Par exemple, les moyens d'horodatage peuvent être basés sur l'utilisation d'une horloge radio-fréquentielle telle que généralement utilisée pour la mise à l'heure à distance de dispositifs délocalisés ou encore être basé sur l'utilisation de la technologie GPS (pour Global Positioning System en anglais). Dans le cas où le réseau 12 est un réseau rapide, une synchronisation des modules déportés peut être réalisée à l'aide d'une trame de synchronisation envoyée périodiquement à tous les modules.

De tels moyens présentent l'avantage d'être universels et donc communs et synchronisés pour tous les modules déportés, ce qui est nécessaire à la mise en oeuvre de l'invention.

Les moyens de traitement 103 sont alors aptes à mémoriser l'horodate 22, instant auquel est reçu un signal temporel $20_i$ dont le descripteur $21_i$ montre qu'il y a eu occurrence d'un évènement C. Avantageusement, à l'aide de ces moyens d'horodatage, le module déporté $10_i$ tient à jour un historique des détections survenues.

On remarque que l'invention permet donc de ne pas transmettre les signaux temporels acquis mais uniquement un horodate associé à un descripteur des signaux temporels incluant peu de données. Ces données, par exemple l'ensemble des 11 niveaux dans les 11 bandes de fréquence plus le niveau obtenu par un calcul aux ordres supérieurs, doivent néanmoins être suffisantes pour permettre au dispositif d'analyse de confirmer et de localiser l'évènement.

Ainsi, un signal de détection $23_i$ comprenant au moins un identifiant du module déporté $10_i$, le descripteur $21_i$, tronqué le cas échéant, et l'horodate 22 est alors envoyé vers le dispositif d'analyse 13 via des moyens d'émission et de réception 107 du module déporté $10_i$.

L'association du descripteur $21_i$ et de son horodate au sein du signal de détection $23_i$ envoyé au dispositif d'analyse 13 permet à celui-ci de confirmer l'occurrence d'un évènement et de localiser cet évènement en comparant le descripteur et son horodate à d'autres descripteurs associés à leur horodatage reçus en provenance d'autres modules déportés placés sur la canalisation 1.

En outre, afin de permettre la localisation de l'évènement, il est utile que la vitesse des ondes acoustiques, des vibrations ou des contraintes révélatrices d'un impact mécanique ou d'une fuite ou encore d'un transitoire de pression soit connue du dispositif d'analyse 13.

Avantageusement, les modules déportés peuvent donc réaliser un calcul automatique de la vitesse du son dans la canalisation 1. Un tel calcul peut, par exemple, être effectué lors de l'occurrence d'un évènement C ayant eu lieu entre les deux modules déportés $10_{i-i}$ et $10_i$, lorsque l'évènement est également détecté par le module déporté $10_{i+1}$ adjacent au module $10_i$. On utilisera alors la durée $Tp=t_{i+1}-t_i$, $t_i$ étant l'instant de détection au sein du module $10_i$, de propagation de l'onde acoustique entre les deux modules déportés $10_i$, $10_{i+1}$ formant le tronçon de canalisation adjacent au tronçon où a eu lieu l'évènement C situé entre les modules $10_{i-1}$ et $10_i$.

Dans ce cas, la vitesse du son V sera égale à $D_{i,i+1}$ / Tp. Elle sera avantageusement calculée dans l'unité de calcul 104 du module $10_i$ avant d'être communiquée au dispositif d'analyse 13.

Selon une caractéristique avantageuse, l'unité de détection 105 est apte à sélectionner une partie seulement du descripteur $21_i$ pour communication de la détection au dispositif d'analyse 13. La partie sélectionnée, incluse dans le signal de détection, est, par exemple, seulement l'ensemble des niveaux Niv dans les bandes de fréquence révélatrices de l'occurrence de l'évènement détecté, un choc par exemple, ou seulement l'ensemble des niveaux Niv dans lesquels un dépassement de seuil S a été observé.

En excluant ainsi les composantes du descripteur non pertinentes, on diminue d'autant la quantité de données transitant entre les modules déportés $10_i$ et le dispositif d'analyse 13.

En comparant les horodates et les niveaux dans les bandes de fréquence où un seuil a été dépassé pour une pluralité de modules déportés adjacents, le dispositif d'analyse 13 est alors apte à confirmer et éventuellement à localiser les impacts mécaniques, les fuites ou transitoires de pression survenus dans la canalisation 1.

Une réalisation préférentielle illustré par les pointillés sur la figure 2, le dispositif d'analyse 13 est un des modules déportés $10_i$ qui possède une unité d'analyse 106 apte à confirmer et à localiser un évènement C dans le cas où il est le module déporté le plus proche de l'évènement, donc le premier à l'avoir détecté. L'unité d'analyse 106 constituent des moyens de confirmation et de localisation aptes à analyser la cohérence des signaux de détection de manière à confirmer et localiser l'impact mécanique ou la fuite ou le transitoire de pression.

Le module déporté $10_i$ est alors tel que les moyens d'émission 107 sont aptes à émettre un signal de détection à destination du ou des modules déportés adjacents lors de la détection interne par les moyens de traitement du signal du module déporté d'ondes acoustiques ou de vibrations ou de contraintes révélatrices d'un impact mécanique ou d'une fuite ou d'un transitoire de pression.

Le module déporté $10_i$ comprend en outre des moyens de réception 107' aptes à recevoir un ou des signaux de détection en provenance du ou des modules déportés adjacents.

Les signaux de détection reçus sont utilisés avec le signal de détection propre afin de confirmer et de localiser l'évènement détecté.

Selon cette réalisation préférentielle, chaque module déporté est apte à fonctionner selon deux modes, un mode dit détecteur et un mode dit confirmateur. Les moyens de réception 107' sont en particulier aptes à ouvrir une fenêtre temporelle de réception des signaux de détection $23_j$, $j \neq i$ et ici, j=i-1,i+1, en provenance du ou des modules adjacents $10_j$, quand les moyens de traitement 103 du signal détecte des ondes acoustiques ou des vibrations ou des contraintes révélatrices d'un impact mécanique ou d'une fuite ou d'un transitoire de pression.

Dans une réalisation avantageuse, le module déporté $10_i$ comprend un micro-processeur associé à une mémoire non volatile dans laquelle sont stockés des paramètres de configuration pour l'ensemble des fonctions réalisées par le module déporté, en particulier les fonctions réalisées par les moyens de traitement 103 réalisant la décomposition du signal temporel ainsi que la détection d'un évènement.

Les paramètres de configuration pour la décomposition du signal et pour la détection sont lus au démarrage du module déporté $10_i$ dans des fichiers de configuration sauvegardés dans la mémoire interne non volatile du module déporté $10_i$.

Pour chaque bande de fréquence du descripteur, les fichiers de configuration comprennent au minimum quatre paramètres : la fréquence minimum de la bande, la fréquence maximale de la bande, la valeur moyenne du niveau efficace calculée dans cette bande et l'écart type moyen de la valeur efficace calculée dans cette bande.

Les deux derniers paramètres peuvent être préalablement enregistrés par un opérateur ayant, à sa connaissance, les niveaux et écarts types généralement observés dans chaque bande. Ils peuvent aussi être calculés lors d'une phase d'auto-réglage du module déporté ou encore être calculés en permanence lorsque les seuils sont auto-adaptatifs.

Les six paramètres de détection suivants peuvent aussi être stockés au sein du module déporté : la durée de la phase d'auto-réglage, la durée des mesures mémorisées qui sera utilisée pour calculer automatiquement les seuils de détection en mode auto-adaptatif, la durée minimale du dépassement de seuil dans les bandes de fréquence représentatives de la détection d'un impact mécanique pour qu'un impact mécanique soit détecté, la durée minimale du dépassement de seuil pour confirmer une détection de fuite, le facteur de seuil de détection M commun à l'ensemble des composantes du descripteur et à l'aide duquel sont calculés les seuils, la sensibilité du capteur utilisé pour les mesures d'ondes acoustiques, de vibrations ou de contraintes et la conversion en unités physiques de ces mesures.

Les durées minimales de dépassement de seuil permettent d'éviter que la présence d'artefacts ne déclenche un signal de détection d'impact mécanique ou de transitoire de pression. Le dépassement de seuil par un niveau d'une bande de fréquence doit en effet être observé pendant suffisamment de temps pour qu'un évènement soit effectivement détecté. On constate qu'il est nécessaire que les durées minimales soient supérieures au fenêtrage temporel utilisé pour réaliser le calcul de densité spectrale servant pour la décomposition.

Les paramètres de détection comprennent en outre, avantageusement, une valeur d'activation des bandes de fréquence. Cette valeur d'activation est une combinaison de onze bits signalant l'activation ou la désactivation de chaque bande de fréquence. Cela permet d'éviter la prise en compte de bandes bruyantes, par exemple dues à la présence d'un compresseur ou d'une pompe sur la canalisation pouvant signer dans certaines bandes de fréquence.

On remarque enfin que diverses mises en oeuvre peuvent être réalisées selon les principes de l'invention définis par les revendications suivantes.

**Revendications**

1. Système de détection et de localisation d'un évènement [C] de type impact mécanique, fuite ou transitoire de pression dans une canalisation [1] de transport de fluide, comprenant au moins deux modules déportés [10i-1,10i] de détection destinés à être placés sur la canalisation [1] séparés les uns des autres par des distances connues [Di-1,i], chaque module déporté [10i] incluant chacun au moins :

- des moyens d'acquisition [101] d'un signal temporel [20i] en provenance d'au moins un capteur [11i] d'ondes acoustiques ou de vibrations ou de contraintes associé au module déporté [10i] et repéré par rapport à celui-ci,
- des moyens d'horodatage [102] du signal temporel [20i],
- des moyens de traitement [103] du signal temporel [20i] aptes à calculer [104] un descripteur multi-composantes [21i] représentatif du signal temporel [20i], basé sur une décomposition en N niveaux [Niv] issus de la densité spectrale du signal temporel [20i] dans N bandes de fréquence et à analyser [105] ces niveaux [Niv] de manière à détecter un impact mécanique ou une fuite ou un transitoire,
- des moyens d'émission [107] pour émettre un signal de détection [23i] comportant une partie de ce descripteur [21i] associée à l'horodate [22] du signal temporel [20i] correspondant à la détection, cette partie du descripteur comprenant les niveaux dans les bandes de fréquence révélatrices de l'occurrence de l'évènement détecté, vers au moins un module déporté adjacent [10i-1] ou vers un dispositif d'analyse [13] apte à analyser les signaux [23i] de détection, à confirmer et à localiser les impacts mécaniques ou fuites ou transitoires survenus.

2. Système de détection et de localisation selon la revendication 1, **caractérisé en ce que** le descripteur [21i] comprend en outre au moins un niveau issu de calculs statistiques d'ordre supérieur.

3. Système de détection et de localisation selon l'une des revendications 1 et 2, **caractérisé en ce que** la détection d'un évènement est effective lorsque le dépassement d'un seuil [S] de niveau préalablement déterminé est observé sur au moins un des niveaux [Niv] composante du descripteur [21i] issu du signal temporel [20i] acquis.

4. Système de détection et de localisation selon la revendication 3, **caractérisé en ce que** les seuils [S] utilisés pour chacune des composantes [Niv] du descripteur sont auto adaptatifs, leur adaptation étant réalisée à l'aide du niveau moyen observé dans chacun des composantes du descripteur [21i].

5. Système de détection et de localisation selon la revendication 4, **caractérisé en ce que** le seuil [S] adaptatif pour au moins un des composantes du descripteur est calculé selon la formule suivante : Niveau moyen de la composante + M.(Ecart-type moyen de la composante).

6. Système de détection et de localisation selon la revendication 5, **caractérisé en ce que** le niveau moyen et l'écart-type moyen sont calculés par application d'un facteur d'oubli décroissant vers les valeurs les plus anciennes utilisées dans le calcul des moyennes.

7. Système de détection et de localisation selon l'une des revendications précédentes, **caractérisé en ce que** les types d'évènement [C] sont chacun associés à certaines composantes [Niv] du descripteur de manière à permettre leur distinction.

8. Système de détection et de localisation selon l'une des revendications précédentes, **caractérisé en ce que** des intervalles de durées de dépassement de seuil [S] dans une ou des bandes de fréquence sont associés chacun à un type d'évènement de manière à permettre la distinction des événements.

9. Système de détection et de localisation selon l'une des revendications précédentes, **caractérisé en ce que** chaque module déporté [10i] est tel que :

- les moyens d'émission [107] sont aptes à émettre un signal de détection à destination du ou des modules déportés adjacents [10i-1,10i+1] lors de la détection interne par les moyens de traitement [103] du signal du module déporté d'ondes acoustiques ou de vibrations ou de contraintes révélatrices d'un impact mécanique ou d'une fuite ou d'un transitoire de pression,

et **en ce que** chaque module déporté [10i] comprend en outre :

- des moyens de réception [107'] aptes à recevoir un ou des signaux de détection [23j, j=i-i,i+1] en provenance du ou des modules déportés adjacents [10i-1,10i+1],
- et **en ce que** chaque module déporté [10i] comprend en outre des moyens de confirmation et de localisation [106] aptes à analyser la cohérence des signaux de détection [23j] de manière à confirmer et localiser l'impact mécanique ou la fuite ou le transitoire de pression.

10. Système de détection et de localisation selon la revendication 9, **caractérisé en ce que** chaque module déporté [10i] est apte à fonctionner selon deux modes, un mode dit détecteur et un mode dit confirmateur, le basculement en module déporté confirmateur étant déclenché lorsque, à la suite d'une détection au sein du module déporté [10i] considéré, le module déporté [10i] reçoit au moins un signal de détection [23i-1] dans le cas où le module déporté [10i] possède un seul module déporté adjacent [10i-1] ou lorsque le module déporté [10i] reçoit au moins deux signaux de détection [23i-1,23i+1] dans le cas où le module déporté [10i] possède deux modules déportés adjacents[10i-1,10i+1].

11. Procédé de détection et de localisation d'un évènement [C] de type impact mécanique, fuite ou transitoire de pression dans une canalisation [1] de transport de fluide, le procédé mettant en oeuvre au moins deux modules déportés [10i-1,10i] de détection destinés à être placés sur la canalisation [1] séparés les uns des autres par des distances connues [Di-1,i], le procédé comprenant les étapes suivantes, mises en oeuvre au sein de chaque module déporté [10i] :

- acquisition d'un signal temporel [20i] en provenance d'au moins un capteur [11i] d'ondes acoustiques ou de vibrations ou de contraintes associé au module déporté [10i] et repéré par rapport à celui-ci,
- horodatage [22] du signal temporel [20i],
- traitement du signal temporel [20i] incluant une sous-étape de calcul d'un descripteur multi-composantes [21i] représentatif du signal temporel [20i], basé sur une décomposition en N niveaux [Niv] issus de la densité spectrale du signal temporel [20i] dans N bandes de fréquence et une sous-étape d'analyse de ces niveaux [Niv] de manière à détecter un impact mécanique ou une fuite ou un transitoire,
- émission d'un signal temporel [23i] comportant au moins une partie de ce descripteur [21i] associé à l'horodate [22] du signal temporel [20i] correspondant à la détection, cette partie du descripteur comprenant les niveaux dans les bandes de fréquence révélatrices de l'occurrence de l'évènement détecté, vers au moins un module déporté adjacent [10i] ou vers un dispositif d'analyse [13] apte à analyser les signaux de détection [23i], à confirmer et à localiser les impacts mécaniques ou fuites ou transitoires survenus.

**Patentansprüche**

1. System zur Erfassung und Lokalisierung eines Ereignisses (C) vom Typ mechanischer Stoß, Leckage oder Drucktransient in einer Kanalisation (1) zur Beförderung von Flüssigkeit, umfassend mindestens zwei versetzte Erfassungsmodule (10i-1, 10i), die dazu bestimmt sind, auf der Kanalisation (1) angeordnet zu werden, und voneinander durch bekannte Abstände (Di-1, i) getrennt sind, wobei jedes versetzte Modul (10i) jeweils mindestens umfasst:

- Aufnahmemittel (101) eines Zeitsignals (20i), das von mindestens einem Schallwellen- oder Schwingungs- oder Spannungssensor (11 i) kommt, der dem versetzten Modul (10i) zugeordnet und in Bezug zu diesem positioniert ist,
- Zeitstempelmittel (102) des Zeitsignals (20i),
- Bearbeitungsmittel (103) des Zeitsignals (20i), die geeignet sind, einen Mehrkomponenten-Deskriptor (21 i) zu berechnen (104), der für das Zeitsignal (20i) repräsentativ ist, basierend auf einer Zerlegung in N Niveaus (Niv), die von der Spektraldichte des Zeitsignals (20i) stammen, in N Frequenzbändern, und diese Niveaus (Niv) zu analysieren (105), um einen mechanischen Stoß oder eine Leckage oder einen Transienten zu erfassen,
- Sendemittel (107), um ein Erfassungssignal (23i), umfassend einen Teil dieses Deskriptors (21 i) in Verbindung mit dem Zeitstempel (22) des Zeitsignals (20i) entsprechend der Erfassung, wobei dieser Teil des Deskriptors die Niveaus in den Frequenzbändern umfasst, die das Vorliegen des erfassten Ereignisses darstellen, zu mindestens einem angrenzenden versetzten Modul (10i-1) oder zu einer Analysevorrichtung (13) zu entsenden, die geeignet ist, die Erfassungssignale (23i) zu analysieren, die aufgetretenen mechanischen Stöße oder Leckagen oder Transienten zu bestätigen und zu lokalisieren.

2. Erfassungs- und Lokalisierungssystem nach Anspruch 1, **dadurch gekennzeichnet, dass** der Deskriptor (21 i) ferner mindestens ein Niveau umfasst, das von statistischen Berechnungen höherer Ordnung stammt.

3. Erfassungs- und Lokalisierungssystem nach einem der Ansprüche 1 und 2, **dadurch gekennzeichnet, dass** die Erfassung eines Ereignisses effektiv ist, wenn die Überschreitung einer vorbestimmten Niveauschwelle (S) auf mindestens einem der Niveaus (Niv), das eine Komponente des Deskriptors (21 i) ist, ausgehend von dem erfassten Zeitsignal (20i) beobachtet wird.

4. Erfassungs- und Lokalisierungssystem nach Anspruch 3, **dadurch gekennzeichnet, dass** die Schwellen (S), die für jede der Komponenten (Niv) des Deskriptors verwendet werden, selbstanpassend sind, wobei ihre Anpassung mit Hilfe des durchschnittlichen in jeder der Komponenten des Deskriptors (21 i) beobachteten Niveaus durchgeführt wird.

5. Erfassungs- und Lokalisierungssystem nach Anspruch 4, **dadurch gekennzeichnet, dass** die Anpassungsschwelle (S) für mindestens eine der Komponenten des Deskriptors nach folgender Formel berechnet ist: durchschnittliches Niveau der Komponente + M.(durchschnittlicher typischer Abstand der Komponente).

6. Erfassungs- und Lokalisierungssystem nach Anspruch 5, **dadurch gekennzeichnet, dass** das durchschnittliche Niveau und der durchschnittliche typische Abstand durch Anwendung eines Vergessensfaktors berechnet sind, der zu den ältesten Werten, die bei der Berechnung der Durchschnitte verwendet wurden, hin abnehmend ist.

7. Erfassungs- und Lokalisierungssystem nach einem der vorhergehenden Ansprüche, **dadurch gekennzeichnet, dass** die Ereignistypen (C) jeweils mit gewissen Komponenten (Niv) des Deskriptors verbunden sind, um ihre Unterscheidung zu ermöglichen.

8. Erfassungs- und Lokalisierungssystem nach einem der vorhergehenden Ansprüche, **dadurch gekennzeichnet, dass** Intervalle von Schwellenüberschreitungszeiten (S) in einem oder mehreren Frequenzbändern jeweils mit einem Ereignistyp verbunden sind, um die Unterscheidung der Ereignisse zu ermöglichen.

9. Erfassungs- und Lokalisierungssystem nach einem der vorhergehenden Ansprüche, **dadurch gekennzeichnet, dass** jedes versetzte Modul (10i) derart ist, dass:

- die Sendemittel (107) geeignet sind, ein Erfassungssignal in Richtung des oder der angrenzenden versetzten Module (10i-1, 10i+1) bei der internen Erfassung durch die Bearbeitungsmittel (103) des Signals des versetzten Moduls von Schallwellen oder Schwingungen oder Spannungen, die einen mechanischen Stoß oder eine Leckage oder einen Drucktransienten aufzeigen, zu entsenden,

und dass jedes versetzte Modul (10i) ferner umfasst:

- Empfangsmittel (107'), die geeignet sind, ein oder mehrere Erfassungssignale (23j, j=i-1, i+1) von dem oder den angrenzenden versetzten Modulen (10i-1, 10i+1) zu empfangen,
- und dass jedes versetzte Modul (10i) ferner Bestätigungs- und Lokalisierungsmittel (106) umfasst, die geeignet sind, die Kohärenz des Erfassungssignale (23j) zu analysieren, um den mechanischen Stoß oder die Leckage oder den Drucktransienten zu bestätigen und lokalisieren.

10. Erfassung- und Lokalisierungssystem nach Anspruch 9, **dadurch gekennzeichnet, dass** jedes versetzte Modul (10i) geeignet ist, auf nach zwei Modi zu funktionieren, einem so genannten Erfassungsmodus und einem so genannten Bestätigungsmodus, wobei das Schwenken in das versetzte Bestätigungsmodul ausgelöst wird, wenn nach einer Erfassung in dem betreffenden versetzten Modul (10i) das versetzte Modul (10i) mindestens ein Erfassungssignal (23i-1) empfängt, wenn das versetzte Modul (10i) ein einziges angrenzenden versetztes Modul (10i-1) umfasst, oder wenn das versetzte Modul (10i) mindestens zwei Erfassungssignale (23i-1, 23i+1) empfängt, wenn das versetzte Modul (10i) zwei angrenzende versetzte Module (10i-1, 10i+1) besitzt.

11. Verfahren zur Erfassung und Lokalisierung eines Ereignisses (C) vom Typ mechanischer Stoß, Leckage oder Drucktransient in einer Kanalisation (1) zur Beförderung von Flüssigkeit, wobei das Verfahren mindestens zwei versetzte Erfassungsmodule (10i-1, 10i+1) einsetzt, die dazu bestimmt sind, auf der Kanalisation (1) angeordnet zu werden, und die voneinander durch bekannte Abstände (Di-1, i) getrennt sind, wobei das Verfahren die folgenden Schritte umfasst, die in jedem versetzten Modul (10i) eingesetzt werden:

- Erfassung eines Zeitsignals (20i), das von mindestens einem Schallwellen-oder Schwingungs- oder Spannungssensor (11 i) kommt, der dem versetzten Modul (10i) zugeordnet und in Bezug zu diesem positioniert ist,
- Zeitstempelung (22) des Zeitsignals (20i),
- Bearbeitung des Zeitsignals (20i), umfassend einen Unterschritt der Berechnung eines Mehrkomponenten-Deskriptors (21 i), der für das Zeitsignal (20i) repräsentativ ist, basierend auf einer Zerlegung in N Niveaus (Niv), die von der Spektraldichte des Zeitsignals (20i) stammen, in N Frequenzbändern, und einen Unterschritt der Analyse dieser Niveaus (Niv), um einen mechanischen Stoß oder eine Leckage oder einen Transienten zu erfassen,
- Senden eines Zeitsignals (23i), umfassend einen Teil dieses Deskriptors (21 i) in Verbindung mit dem Zeitstempel (22) des Zeitsignals (20i) entsprechend der Erfassung, wobei dieser Teil des Deskriptors die Niveaus in den Frequenzbändern umfasst, die das Vorliegen des erfassten Ereignisses darstellen, zu mindestens einem angrenzenden versetzten Modul (10i) oder zu einer Analysevorrichtung (13), die geeignet ist, die Erfassungssignale (23i) zu analysieren, die aufgetretenen mechanischen Stöße oder Leckagen oder Transienten zu bestätigen und zu lokalisieren.

**Claims**

1. A system for detecting and localizing an event [C] of the mechanical impact, leak or pressure transient type in a fluid transport duct [1], comprising at least two remote detection modules [10i-1, 10i] intended to be placed on the duct [1] separated from each other by known distances [Di-1, i], each remote module [10i] each comprising at least:

   - means [101] for acquiring a time signal [20i] from at least one sensor [11i] of acoustic waves or vibrations or stresses associated with the remote module [10i], and located relatively to the latter,
   - means [102] for time-stamping the time signal [20i],
   - means [103] for processing the time signal [20i] capable of computing [104] a multi-component descriptor [21i] representative of the time signal [20i], based on a breakdown into N levels [Niv] from the spectral density of the time signal [20i] in N frequency bands and of analyzing [105] these levels [Niv] so as to detect a mechanical impact, leak or transient,
   - emission means [107] for emitting a detection signal [23i] including a portion of this descriptor [21i] associated with the stamped date [22] of the time signal [20i] corresponding to the detection, this portion of the descriptor comprising the levels in the frequency bands revealing the occurrence of the detected event, towards at least one adjacent remote module [10i-1] or towards an analysis device [13] capable of analyzing the detection signals [23i], of confirming and of localizing the mechanical impacts, leaks or transients having occurred.

2. The detection and localization system according to claim 1, **characterized in that** the descriptor [21i] further comprises at least one level stemming from statistical computations of a higher order.

3. The detection and localization system according to one of claims 1 and 2, **characterized in that** the detection of an event is effective when exceedance of a threshold [S] of a level determined beforehand is observed on at least one of the levels [Niv] component of the descriptor [21i] from the acquired time signal [20i].

4. The detection and localization system according to claim 3, **characterized in that** the thresholds [S] used for each of the components [Niv] of the descriptor are self-adaptive, their adaptation being achieved by means of the average level observed in each of the components of the descriptor [21i].

5. The detection and localization system according to claim 4, **characterized in that** the adaptive threshold [S] for at least one the components of the descriptor is computed according to the following formula: Average level of the component + M.(average standard deviation of the component).

6. The detection and localization system according to claim 5, **characterized in that** the average level and the average standard deviation are computed by applying a forgetting factor decreasing towards the oldest values used in computing the averages.

7. The detection and localization system according to any one of the preceding claims, **characterized in that** the event types [C] are each associated with certain components [Niv] of the descriptor so as to allow their distinction.

8. The detection and localization system according to any one of the preceding claims, **characterized in that** intervals of threshold [S] exceedance periods in frequency band(s) are each associated with an event type so as to allow the events to be distinguished.

9. The detection and localization system according to any one of the preceding claims, **characterized in that** each remote module [10] is such that:

   - the emission means [107] are capable of emitting a detection signal intended for adjacent remote module(s) [10i-1, 10i+1] upon internal detection by the means [103] for processing the signal of the remote module, of acoustic waves or vibrations or stresses revealing a mechanical impact or a leak or a pressure transient,

and **in that** each remote module [10i] further comprises:

  - receiving means [107'] capable of receiving detection signal(s) [23j, j=i-1, i+1] from the adjacent remote module(s) [10i-1, 10i+1],
  - and **in that** each remote module [10i] further comprises confirmation and localization means [106] capable of analyzing the coherence of the detection signals [23j] so as to confirm and localize the mechanical impact or the leak or the pressure transient.

10. The detection and localization system according to claim 9, **characterized in that** each remote module [10i] is capable of operating according to two modes, a so-called detector mode and a so-called confirmer mode, the switching of the confirmer remote module being triggered when, subsequent to detection within the relevant remote module [10i], the remote module [10i] receives at least one detection signal [23i-1] in the case when the remote module [10i] has only a single adjacent remote module [10i-1] or when the remote module [10i] receives at least two detection signals [23i-1, 23i+1] in the case when the remote module [10i] has two adjacent remote modules [10i-1, 10i+1].

11. A method for detecting and localizing an event [C] of the mechanical impact, leak or pressure transient in a fluid transport duct [1], the method applying at least two remote detection modules [10i-1, 10i] intended to be placed on the duct [1] separated from each other by known distances [Di-1, i], the method comprising the following steps, applied within each remote module [10i]:

  - acquiring a time signal [20i] from at least one sensor [11i] of acoustic waves or vibrations or stresses associated with the remote module [10i] and localized relatively to the latter,
  - time-stamping [22] the time signal [20i],
  - processing the time signal [20i] including a substep for computing a multi-component descriptor [21i] representative of the time signal [20i], based on a breakdown into N levels [Niv] from the spectral density of the time signal [20i] in N frequency bands and a substep for analyzing these levels [Niv] so as to detect a mechanical impact or a leak or a transient,
  - emitting a time signal [23i] including at least one portion of this descriptor [21i] associated with the time stamp [22] of the time signal [20i] corresponding to the detection, this portion of the descriptor comprising the levels in the frequency bands revealing the occurrence of the detected event, towards at least one adjacent remote module [10i] or towards an analysis device [13] capable of analyzing the detection signals [23i], of confirming and localizing the mechanical impacts or leaks or transients having occurred.

**FIG.1**

**FIG.2**

**FIG.3a**

FIG.3b

FIG.3c

FIG.3d

**EP 2 097 728 B1**

**RÉFÉRENCES CITÉES DANS LA DESCRIPTION**

**Documents brevets cités dans la description**

- WO 0181885 A1
- WO 9825121 A
- GB 2367362 A
- DE 3726585 A1
- FR 2503363
- US 5101774 A
- WO 2004031719 A1